**Europäisches Patentamt**

**European Patent Office**

**Office européen des brevets**

(19)

(11) Veröffentlichungsnummer: **0 472 852 B1**

# EUROPÄISCHE PATENTSCHRIFT

(12)

(45) Veröffentlichungstag der Patentschrift: **13.12.95**

(51) Int. Cl.6: **C08F 265/04**, //(C08F265/04, 214:06)

(21) Anmeldenummer: **91110729.0**

(22) Anmeldetag: **28.06.91**

(54) **Herstellung eines schlagzähen Polyacrylsäureester-Vinylchlorid-Pfropfcopolymerisats**

(30) Priorität: **31.08.90 DE 4027640**

(43) Veröffentlichungstag der Anmeldung:
**04.03.92 Patentblatt 92/10**

(45) Bekanntmachung des Hinweises auf die Patenterteilung:
**13.12.95 Patentblatt 95/50**

(84) Benannte Vertragsstaaten:
**AT BE CH DE ES FR GB IT LI NL SE**

(56) Entgegenhaltungen:
**EP-A- 0 195 942**
**EP-A- 0 313 507**
**US-A- 3 832 318**

(73) Patentinhaber: **VESTOLIT GmbH**
**Postfach 10 23 60**
**D-45753 Marl (DE)**

(72) Erfinder: **Sturm, Harald, Dr.**
**Wilhelm-Busch-Weg 3**
**W-4270 Dorsten 11 (DE)**
Erfinder: **Boebel, Armin, Dr.**
**Uerdinger Strasse 5**
**W-4370 Marl (DE)**
Erfinder: **Prell, Karl-Heinz, Dr.**
**Bitterfelder Strasse 2**
**W-4370 Marl (DE)**

**Beschreibung**

Die Erfindung betrifft ein Verfahren zur Herstellung von thermoplastischen Massen, bestehend aus Vinylchlorid-Homo- oder -Copolymerisaten und Polymeren zur Schlagzähmodifizierung auf der Basis von Polyacrylsäureestern. Gegenüber dem Stand der Technik wurde eine Verbesserung der Korngrößenverteilung, der Reproduzierbarkeit der Schüttdichte und vor allem der Menge an Wandanbackungen während der Polymerisation erreicht.

Die Verfahren zur Herstellung von Vinylchlorid-Pfropfcopolymerisaten in Suspension auf in Emulsion hergestellte kautschukelastische Polymerteilchen nach dem Stand der Technik weisen noch einige Nachteile auf.

Die Herstellung von Pfropfpolymerisaten, bei denen Vinylchlorid auf Polyacrylsäurealkylester - die der Schlagzähmodifizierung dienen - aufpolymerisiert wird, ist bekannt. In den Patentschriften DE-B-10 82 734, 10 90 856 und 10 90 857 werden Verfahren beschrieben, bei denen Pfropfpolymerisate mit ca. 2 bis 25 Gewichtsprozent Acrylesterkautschuk erhalten werden. Bei der Herstellung derartiger Pfropfpolymerisate weisen die Reaktorwandungen Beläge auf, die nur mühsam zu entfernen sind. Die Korngrößenverteilung (gemessen mit einem Luftstrahlsieb) weist noch einen Feinanteil unterhalb von 40 $\mu$m und einen Grobkornanteil oberhalb von 250 $\mu$m auf. Der Feinanteil führt zu einer Trübung und somit Belastung des Abwassers bei der Abtrennung des Suspensionspolymerisats von der wäßrigen Phase und zu Staubproblemen bei der Handhabung des trockenen Pulvers. Die Grobanteile verschlechtern die Oberflächenqualität auf modernen Hochleistungsverarbeitungsmaschinen.

Aus der DE-A-21 62 615 ist die Herstellung von Pfropfpolymerisaten von Vinylchlorid auf Polymere des Acrylestertyps bekannt, wobei die Endpolymerisate 30 bis 60 Gewichtsprozent an Acrylshäureestereinheiten enthalten. Hierbei werden die Acrylsäureester in Gegenwart von kleinen Mengen eines polyfunktionellen ethylenisch ungesättigten Monomers in Emulsion polymerisiert. Zur Emulsionspolymerisation soll ein Emulgator mit einem niedrigen HLB-Wert (2 bis 12) oder einem hohen (> 40) eingesetzt werden, wie z. B. das Natriumsalz des Sulfobernsteinsäure-bis-(tridecylesters) (HLB = 4 bis 7) oder ein Alkylsulfatsalz mit kurzer Alkylkette, wie Natrium-2-ethylhexylsulfat (HLB ca. 50). Zu der wäßrigen Emulsion der Kautschukteilchen wird Vinylchlorid, ein geeignetes Suspendiermittel und ein im Monomeren löslicher Initiator zugegeben. Der pH-Wert ist auf 3 bis 9 einzustellen. Um die Bildung von Wandbelägen zu verhindern, wird vorzugsweise eine hochviskose Methylhydroxypropylcellulose eingesetzt. Die Vinylchloridpfropfpolymerisation wird in Suspension durchgeführt.

Nachteilig bei diesem Verfahren ist die Verwendung eines hochmolekularen und dadurch schlecht handhabbaren Suspendiermittels. Weiterhin reicht die Schüttdichte der Pfropfpolymerisate für die üblichen Verarbeitungsverfahren nicht aus und in Mischung mit Polyvinylchlorid werden bei der Verarbeitung auf z. B. Extrudern Formteile mit vergleichsweise niedriger Schlagzähigkeit, schlechter Oberfläche und eine niedrige Ausstoßleistung erhalten.

Aus der EP-A-0 313 507 ist ein Verfahren bekannt, bei dem ein Polymerisat mit 70 bis 40 Gewichtsprozent polymerisierter Einheiten des Vinylchlorids und 30 bis 60 Gewichtsprozent polymerisierter Einheiten mindestens eines Acrylsäureesters sowie gegebenenfalls weiterer mit Acrylsäureestern copolymerisierbarer Monomerer erhalten wird. In einem ersten Schritt werden hierbei in wäßriger Emulsion Acrylsäureester und gegebenenfalls weitere Monomere unter Zusatz eines Monomeren mit mindestens zwei ethylenisch ungesättigten, nichtkonjugierten Doppelbindungen in Gegenwart von Initiator und eines wasserlöslichen Salzes einer 12 bis 18 C-Atome enthaltenden Fettsäure als Emulgator bei einem Anfangs-pH-Wert von oberhalb 9 zu einem Polymeren mit einer Glasübergangstemperatur von unterhalb 0 °C umgesetzt. Zusätzlich zu dem Fettsäuresalz wird in Gegenwart mindestens eines Alkali- oder Ammoniumsalzes einer Alkylsulfonsäure mit 8 bis 20 C-Atomen und/oder einer Alkylacrylsulfonsäure mit 3 bis 16 C-Atomen im Alkylrest polymerisiert.

In einem zweiten Schritt wird Wasser, Suspendiermittel, ein Fällungsmittel für die bei der Emulsionspolymerisation verwendeten Emulgatoren, Initiator, gegebenenfalls weitere Hilfsstoffe sowie Vinylchlorid im Polymerisationsgefäß vorgelegt und hierzu die wäßrige Polyacrylsäureesterdispersion gegeben.

Die Zugabe eines zweiten Emulgators und eines Fällungsmittels ist im normalen Betriebsablauf störend. Außerdem wird hierdurch ein erhöhter Lager- und Abfüllaufwand notwendig.

Es wurde nun ein Verfahren gefunden, das die Nachteile der genannten Verfahren nicht aufweist. Die erfindungsgemäße Herstellung des Endpolymerisats erfolgt in zwei Stufen, wobei in einer ersten Stufe das kautschukelastische Schlagzähmodifizierungsmittel in einer Emulsionspolymerisation und in einer zweiten Stufe das die zu modifizierende Matrix bildende Monomere in Gegenwart der kautschukelastischen Teilchen in Suspension polymerisiert wird, wobei in der zweiten Stufe das die Matrix bildende Monomere mit dem Initiator, dem Suspensionsmittelsystem und gegebenenfalls Zuschlagstoffe vorgelegt und auf eine Temperatur ≥ 30 °C aufgeheizt und dann der Emulsionslatex zugefahren wird. Der Emulsionslatex hat aus produktionstechnischen Gründen meist eine Temperatur von 30 bis 40 °C.

In der ersten Stufe wird mindestens ein Acrylsäureester in Gegenwart von vernetzend wirkenden, mit den Acrylsäureestern copolymerisierbaren Verbindungen mit mindestens zwei nichtkonjugierten Doppelbindungen in wäßriger Emulsion polymerisiert.

Die Polymerisation in wäßriger Emulsion findet in Gegenwart von emulgierend wirkenden Salzen statt.

Als Acrylsäureester kommen die in Betracht, die im Polymeren eine Glasumwandlungstemperatur von unter -20 °C aufweisen, wobei auch Acrylsäureestermischungen oder auch Mischungen mit copolymerisierbaren Monomeren eingesetzt werden können.

Beispielhaft sind als Acrylsäureester zu nennen: Alkylester mit 2 bis 10 C-Atomen in der Alkylkette, wie z. B. Butylacrylat, 2-Ethyl-hexylacrylat, Octylacrylat und ähnliche Acrylsäurealkylester, oder Acrylsäurealkylarylester, wie z. B. Phenylpropylacrylat, oder Acrylsäurepolyetherester, wie z. B. Phenoxyethoxyethylacrylat.

Als vernetzend wirkende Substanzen seien beispielhaft aufgeführt: (Meth)acrylate mehrwertiger Alkohole, wie z. B. Ethylenglykoldimethacrylat, Butylenglykoldimethacrylat, Pentaerythrittetraacrylat etc. oder Allylmethacrylat, oder die Allylester mehrwertiger Säuren, wie z. B. Phthalsäurediallylester, Maleinsäurediallylester, Fumarsäurediallylester.

Die vernetzend wirkenden Verbindungen werden in Mengen von 0,1 bis 5,0 Gewichtsteilen der organischen Phase der ersten Stufe eingesetzt, wobei die Menge so hoch zu wählen ist, daß der Gelgehalt der Teilchen 90 % oder mehr beträgt.

Geeignete mit den Acrylsäureestern copolymerisierbare Monomere sind beispielsweise Styrol, Vinylacetat, Methacrylsäureester mit 1 bis 10 C-Atomen, Vinylether.

Als emulgierend wirkende Verbindungen können eingesetzt werden die Alkalisalze oder das Ammoniumsalz von Fettsäuren mit 12 bis 18 C-Atomen oder von Alkylsulfonsäuren mit 12 bis 18 C-Atomen oder von Alkylarylsulfonsäuren oder von Schwefelsäurealkylhalbestern mit 12 bis 18 C-Atomen in der Kette.

Beispielhaft seien genannt Natriumlaurat, Natriumlaurylsulfonat, Natriumdodecylbenzolsulfonaf und Natriumlaurylsulfat. Üblicherweise werden diese in Mengen von 0,3 bis 2,5 Gewichtsprozent, bezogen auf das Monomere der ersten Stufe, eingesetzt.

In Initiatoren bei der Emulsionspolymerisation werden übliche Verbindungen, wie Ammoniumperoxidisulfat, Wasserstoffperoxid, oder Azoverbindungen, wie z. B. Azodiisobutyronitril etc., in Mengen von 0,05 bis 0,5 Gewichtsprozent, bezogen auf das Monomere, eingesetzt.

Bei Bedarf können reduzierende Verbindungen und Metallsalze, die zur Bildung eines Redoxsystems mit dem Initiator befähigt sind, zugegeben werden, wie z. B. Alkalisulfite, Alkylialdehydsulfoxylate, organische Säuren, wie Ascorbinsäure, und Metallsalze, wie z. B. Eisensulfat und Kupfersulfat.

Die Emulsionspolymerisation kann diskontinuierlich, kontinuierlich oder halbkontinuierlich durchgeführt werden, wobei die Methode der halbkontinuierlichen Polymerisation bevorzugt wird.

Hierbei wird bei der Polymerisationstemperatur von 40 bis 90 °C ein Teil des Wassers der Monomeren, des Emulgators und des Initiators (bzw. des Redoxsystems) vorgelegt und nachdem die Polymerisation in Gang gekommen ist, der restliche Anteil der Reaktionsmischung kontinuierlich oder absatzweise zugegeben.

Bei einem Umsatz von > 99,9 % wird die Polymerisation beendet. In der zweiten Stufe wird auf die in der ersten Stufe hergestellten kautschukelastischen Teilchen in wäßriger Suspension Vinylchlorid oder Vinylchlorid mit bis zu 20 Gewichtsprozent an copolymerisierbaren Monomeren aufpolymerisiert.

Um die vorteilhaften Eigenschaften des Endpolymerisats zu erhalten, ist es notwendig, zuerst eine Suspension von VC in der wäßrigen Phase herzustellen und erst danach den Emulsionslatex zuzufahren, wobei überraschenderweise gefunden wurde, daß erst bei Zugabetemperaturen von oberhalb 30 °C die Menge an Abscheidungen an den Reaktorwandungen drastisch erniedrigt wird.

Geeignete copolymerisierbare Monomere sind beispielsweise Vinylester (z. B. Vinylacetat, Vinyllaurat), Vinylhalogenide (z. B. Vinylidenchlorid), ungesättigte Säuren und deren Anhydride (z. B. Fumarsäure, Maleinsäure), (Meth)acrylsäure sowie deren Ester (Mono- und Diester) und Imide der Maleinsäure sowie dessen N-Derivate.

Als Suspensionsmittel kommen die üblicherweise verwendeten zur Anwendung, wie z. B. Hydroxyethylcellulose, Hydroxypropylcellulose, Methylhydroxypropylcellulose, Polyvinylalkohole, teilverseifte Polyvinylacetate, Mischpolymerisate von Maleinsäure mit Alkylvinylethern, Polyvinylpyrrolidon entweder einzeln oder als Mischung. Zusätzlich können noch Fettsäureester von ein- oder mehrwertigen Alkoholen, wie z. B. Fettsäureethoxylate, Sorbitanester, Fettalkoholethoxylate, zugesetzt werden in Mengen von 0,05 bis 1,0 %.

Die Suspensionspolymerisation wird in Gegenwart von in Vinylchlorid löslichen radikalbildenden Initiatoren durchgeführt. Beispielhaft seien hier Diacylperoxide, wie Dilauroylperoxid, Dibenzoylperoxid; Dialkylperoxide, wie Dicumylperoxid; Peroxyester, wie t-Butylperpivalat, Dialkylperoxydicarbonate mit Isopropyl-,

EP 0 472 852 B1

Butyl-, Myristyl-, Cyclohexyl-, etc. Alkylgruppen; organische Sulfopersäuren, wie Acetylcyclohexylsulfonylperoxid; oder auch Azoinitiatoren, wie Azobis-(isobutyronitril). Der Umsatz an Vinylchlorid soll 75 bis 95 %, bezogen auf eingesetztes Vinylchlorid, betragen. Bei dem gewünschten Endumsatz wird das restliche Monomere entfernt, der Feststoff aus der wäßrigen Dispersion z. B. über Zentrifugen abgetrennt und der so erhaltene Feststoff in z. B. Stromtrocknern getrocknet.

Bei der Kontrolle der Wandbeläge fällt auf, daß bei einer erfindungsgemäßen Vorgehensweise nach der Polymerisation auch nach mehreren Ansätzen nur wenige, leicht entfernbare Anbackungen auf der Wandung des Polymerisationsreaktors haften. Bei einer nicht erfindungsgemäßen Vorgehensweise, bei der der Polyacrylsäureesterlatex vor dem Vinylchlorid zugegeben wurde oder nach dem Vinylchlorid aber bei Temperaturen unterhalb von 30 °C, sind je nach Reaktorgröße Anbackungen bis zu mehreren Zentimetern Dicke, die nur schwer zu entfernen sind und die wie beschrieben die Wärmeabfuhr während der Polymerisation deutlich behindern, schon nach nur einem Polymerisationsansatz zu beobachten.

Das auf diese Art erhaltene modifizierte PVC-Pulver zeichnet sich aus durch enge Korngrößenverteilung, hohes Schüttgewicht bei gleichzeitig günstiger Porosität und guter Entomonomerisierbarkeit.

Die Polymerisate werden bei Polyacrylesteranteilen von bis zu ca. 10 % unter Zusatz üblicher Verarbeitungshilfsmittel, Pigmente und gegebenenfalls anderen Zusatzstoffen durch beispielsweise Extrudieren, Kalandrieren, Spritzgießen etc. zu Formteilen verarbeitet.

Bei Anteilen des Polyacrylsäurealkylesters bis zu 40 % wird üblicherweise mit einem nicht schlagzähmodifizierten Polyvinylchlorid auf Anteile von 3 bis 10 %, bevorzugt von 5 bis 7 %, abgemischt und dann wie vor verarbeitet.

Die Formteile aus dem erfindungsgemäßen Polymerisationsverfahren zeichnen sich durch gute Verarbeitbarkeit, hohe Schlagzähigkeit und gute Oberflächenqualität aus.

Im folgenden wird die Erfindung durch die Beispiele 1 bis 3 und Vergleichsbeispiele 1 bis 4 erläutert.

Die angegebenen Werte wurden nach folgenden Methoden ermittelt:

Gelgehalt des Polyacrylats: der in Tetrahydrofuran unlösliche Anteil; Abtrennung durch Zentrifugieren:

$$\frac{Gel\ [g]}{Polymer\ [g]} \times 100)$$

Quellungsindex des Polyacrylatgels:

$$\frac{gequollenes\ Gel\ [g]}{getrocknetes\ Gel\ [g]}$$

(Gelgehalt und Quellungsindex wurden an gefriergetrocknetem Material bestimmt)

Restmonomergehalte: Head-Space-Gaschromatographie
K-Wert des Pulvers: DIN 53 726
Schüttgewicht: DIN 53 468
Rieselfähigkeit: Trichtermethode (∅ 2 bis 16 mm)
Korngrößenverteilung: mit Luftstrahlsieb nach DIN 53 734
Weichmacheraufnahme: DIN 53 417
Oberfläche des Formteils: visuelle Beurteilung
Schlagzähigkeit: DIN 53 453, Normkleinstab gekerbt

4

## EP 0 472 852 B1

Beispiel 1

a) Herstellung der Polyacrylsäureesterdispersion

|  | Vorlage Teile = kg | Dosierung Teile = kg |
|---|---|---|
| vollentsalztes Wasser | 200 = 60 | 100 = 30 |
| Butylacrylat | - | 99 = 29,7 |
| Allylmethacrylat | - | 1 = 0,3 |
| Ammoniumpersulfat | 0,04 = 0,012 | 0,06 = 0,018 |
| Laurinsäure | 0,36 = 0,108 | 0,54 = 0,162 |
| Natriumhydroxid | 0,083 = 0,025 | 0,123 = 0,037 |

In einem mit einem Blattrührer ausgerüsteten 150-l-Polymerisationsreaktor wurden durch Evakuieren und Begasen mit Stickstoff der Luftsauerstoff verdrängt, 57 kg vollentsalztes Wasser (VE-Wasser), 0,108 kg Laurinsäure und 0,025 kg Natriumhydroxid vorgelegt und auf 80 °C aufgeheizt.

Nachdem die festen Bestandteile gelöst waren, wurden 12 g Ammoniumpersulfat gelöst in 3 kg VE-Wasser zugegeben und hiernach 0,30 kg der Butylacrylat/Allylmethacrylatmischung. Nach 5 Minuten, die Polymerisation war gestartet, wurden innerhalb von vier Stunden die restlichen 29,7 kg der Monomermischung und parallel hierzu eine Lösung von 0,162 kg Laurinsäure, 0,037 kg NaOH und 0,018 kg Ammoniumpersulfat in 30 kg VE-Wasser zugegeben. Es wurde noch zwei Stunden nachpolymerisiert.

Es wurden folgende Werte ermittelt:

| Restmonomergehalt: | < 500 ppm (d. h. Umsatz > 99,95 %) |
|---|---|
| Gelgehalt des Feststoffs: | 95 % |
| Quellungsindex: | 5 |
| Feststoffgehalt: | 25,1 % |

b) Aufpolymerisation von Vinylchlorid auf das Polyacrylat

Für die anschließende Suspensionspolymerisation wurden in einem 235-l-Polymerisationsreaktor mit Impellerrührer und Heizkühlmantel vorgelegt:

| vollentsalztes Wasser: | 112,1 Teile = 89,4 kg |
|---|---|
| Methylhydroxypropylcellulose: (Viskosität 50 mPa s 2gewichtsprozentige Lösung) | 0,16 Teile = 0,128 kg |
| Sorbitanmonolaurat | 0,12 Teile = 0,096 kg |
| Lauroylperoxid | 0,10 Teile = 0,080 kg |

Der Luftsauerstoff wurde durch Evakuieren und Begasen mit Stickstoff verdrängt. Dann wurde zugefahren:

| Vinylchlorid: | 94 Teile = 75 kg |
|---|---|

und nach dem Aufheizen auf 32 °C:

Polybutylacrylatlatex (19,07 kg)

| Festanteil: | 6 Teile = 4,79 kg |
|---|---|
| wäßriger Anteil: | 17,9 Teile = 14,28 kg |

5

Anschließend wurde auf die Polymerisationstemperatur von 60 °C aufgeheizt und bei dieser Temperatur bis zu einem Vinylchloriddruck von 3,5 bar polymerisiert. Hiernach wurde der Ansatz abgekühlt, das restliche Monomere entfernt und der Feststoff durch Filtration von der wäßrigen Phase getrennt. Das Filtrat war klar.

Die Reaktorwandung war frei von Anbackungen.

Der Feststoff wurde in einem Wirbelbetttrockner getrocknet. Es wurden folgende Werte ermittelt:

| Polyacrylatestergehalt: | 6,7 Gew.-% (entspricht einem Vinylchloridumsatz von 89 %) |
|---|---|
| Siebanalyse: | Anteil < 63 $\mu$m : 3 %<br>Anteil > 250 $\mu$m : 2 % |
| Schüttgewicht:<br>Rieselfähigkeit:<br>Weichmacheraufnahme: | 680 g/l<br>2 mm<br>8 g/100 g |

Ohne Reinigung wurden noch 20 Ansätze in dem Reaktor durchgeführt, bis eine Reinigung wegen Anbackungen nötig war, wobei die Wärmeabführung aber noch ausreichend war.

Vergleichsbeispiel 1

Der Polyacrylsäurebutylester-Latex wurde so wie in Beispiel 1 beschrieben hergestellt. Bei der anschließenden VC-Pfropfpolymerisation wurde im Gegensatz zum Beispiel 1 der Latex vor dem Vinylchlorid zugegeben. Die Aufarbeitung war ebenfalls gleich. Das Filtrat war leicht getrübt.

Die Reaktorwandung Zeigte deutliche Beläge. Nach drei Ansätzen war eine Reinigung nötig, da die Wärmeabfuhr durch die starken Beläge so stark beeinträchtigt war, daß die Innentemperatur bei dem nächst folgenden Ansatz nicht mehr hätte konstant gehalten werden können.

Es wurden folgende Werte ermittelt:

| Polyacrylestergehalt: | 6,7 Gew.-% |
|---|---|
| Siebanalyse: | Anteil < 63 $\mu$m : 9 %<br>Anteil > 250 $\mu$m : 12 % |
| Schüttgewicht:<br>Rieselfähigkeit:<br>Weichmacheraufnahme: | 640 g/l<br>2 mm<br>6 g/100 g |

Vergleichsbeispiel 2

Der Polyacrylsäurebutylester-Latex wurde so wie in Beispiel 1 beschrieben hergestellt. Bei der anschließenden VC-Pfropfpolymerisation war der einzige Unterschied zum Beispiel 1, daß der Latex bei 25 °C dem Vinylchlorid enthaltenden Ansatz zugegeben wurde. Die Reaktorwandung zeigte weniger Anbackungen als bei dem Vergleichsbeispiel 1, aber mehr als im Beispiel 1. Es konnten so sechs Polymerisationsansätze ohne Zwischenreinigung durchgeführt werden.

Es wurden folgende Werte ermittelt:

| Polyacrylestergehalt: | 6,7 Gew.-% |
|---|---|
| Siebanalyse: | Anteil < 63 $\mu$m : 5 %<br>Anteil > 250 $\mu$m : 3 % |
| Schüttgewicht:<br>Rieselfähigkeit:<br>Weichmacheraufnahme: | 680 g/l<br>2 mm<br>7 g/100 g |

Beispiel 2

Es wurde verfahren wie in Beispiel 1, jedoch wurden 11 Teile (Feststoff) des Polybutylacrylatlatex bei 32 °C zu 89 Teilen Vinylchlorid in VE-Wasser Suspensionsmittel zugefahren. Der Celluloseanteil lag bei 0,20 % ≙ 0,16 kg.

Nach der Trocknung wurde ein Pulver mit folgenden Werten erhalten:

| Polyacrylestergehalt: | 12,2 Gew.-% |
|---|---|
| Siebanalyse: | Anteil < 63 $\mu$m : 4 %<br>Anteil > 250 $\mu$m : 2 % |
| Schüttgewicht:<br>Rieselfähigkeit:<br>Weichmacheraufnahme: | 650 g/l<br>2 mm<br>6 g/100 g |

Ohne Reinigung wurden noch 12 Ansätze durchgeführt, bis die Anbakkungen zu stark wurden.

Vergleichsbeispiel 3

Es wurde verfahren wie in Beispiel 2, nur daß der Latex bei 20 °C zugefahren wurde.

| Polyacrylestergehalt: | 12,2 Gew.-% |
|---|---|
| Siebanalyse: | Anteil < 63 $\mu$m : 5 %<br>Anteil > 250 $\mu$m : 4 % |
| Schüttgewicht: | 630 g/l |

Die Rieselfähigkeit und Weichmacheraufnahme war wie in Beispiel 2.
Ohne Reinigung konnten noch vier Ansätze durchgeführt werden.

Beispiel 3

Es wurde verfahren wie in Beispiel 1, jedoch wurden 35 Teile (Feststoff) des Polybutylacrylatlatex bei 32 °C zu 89 Teilen Vinylchlorid in VE-Wasser/Suspensionsmittel zugefahren. Der Celluloseanteil lag bei 0,40 %.

Nach der Trocknung wurde ein Pulver mit folgenden Werten erhalten:

| Polyacrylestergehalt: | 38 Gew.-% |
|---|---|
| Siebanalyse: | Anteil < 63 $\mu$m : 8 %<br>Anteil > 250 $\mu$m : 3 % |
| Schüttgewicht:<br>Rieselfähigkeit:<br>Weichmacheraufnahme: | 520 g/l<br>2 mm<br>35 g/100 g |

Ohne Zwischenreinigung wurden noch vier Ansätze gefahren.

Vergleichsbeispiel 4

Es wurde verfahren wie in Beispiel 3, nur daß der Latex vor dem Vinylchlorid zugefahren wurde.
Nach der Trocknung wurde ein Pulver mit folgenden Werten erhalten:

EP 0 472 852 B1

| Polyacrylestergehalt: | 38 Gew.-% |
|---|---|
| Siebanalyse: | Anteil < 63 $\mu$m : 17 % |
| Schüttgewicht: | 380 g/l |
| Rieselfähigkeit: | 12 mm |
| Weichmacheraufnahme: | 50 g/100 g |

Es mußte nach jedem Polymerisationsansatz eine Reinigung vorgenommen werden.

Die Pulver der Beispiele 1 bis 3 und der Vergleichsbeispiele 1 bis 4 wurden unter Zusatz handelsüblicher Rezepturbestandteile auf einem Extruder verarbeitet. Die Polyacrylestergehalte wurden notwendig - durch Zusatz eines handelsüblichen Suspensions-PVC's (K-Wert 68) auf 6,7 %, bezogen auf PVC plus Polyacrylat = 100, eingestellt.

Es wurden Profile hergestellt, deren Oberflächen visuell beurteilt wurden und aus denen Probekörper für die Kerbschlagprüfung gefertigt wurden.

| | Oberfläche | $a_k$ kg/m$^2$ |
|---|---|---|
| Beispiel | | |
| 1 | glänzend | 40 |
| 2 | glänzend | 42 |
| 3 | glänzend, leicht matt | 38 |
| Vgl.-Bsp. | | |
| 1 | glänzend | 34 |
| 2 | glänzend | 38 |
| 3 | glänzend | 38 |
| 4 | matt/streifig | 15 |

**Patentansprüche**

1. Verfahren zur Herstellung von thermoplastischen Massen auf der Basis von Vinylchlorid-Homo- oder Copolymerisaten und auf der Basis von Polyacrylsäureestern, die durch Polymerisation von Acrylsäureestern in Gegenwart von vernetzend wirkenden, mit den Acrylsäureestern copolymerisierbaren Verbindungen mit mindestens zwei nicht-konjugierten Doppelbindungen in wäßriger Emulsion hergestellt werden, mit einer Glasumwandlungstemperatur von unterhalb -20 °C,
dadurch gekennzeichnet,
daß das Vinylchlorid oder Vinylchlorid mit bis zu 20 Gewichtsprozent copolymerisierbarer Monomerer mit einem Initiator, einem Suspensionsmittelsystem und gegebenenfalls Zusatzstoffen in wäßriger Suspension auf eine Temperatur ≥ 30 °C aber unterhalb der Polymerisationstemperatur aufgeheizt und dann nach Zugabe des Polyacrylsäureesterlatex bei Temperaturen von 40 bis 90 °C bis zum gewünschten Umsatz polymerisiert wird.

**Claims**

1. A process for preparing thermoplastic compositions based on vinyl chloride homopolymers or copolymers and based on polyacrylic esters which are prepared in aqueous emulsion by polymerization of acrylic esters in the presence of compounds which have a crosslinking action, are copolymerizable with the acrylic esters and have at least two non-conjugated double bonds, having a glass transition temperature below -20°C, characterized in that the vinyl chloride or vinyl chloride containing up to 20 per cent by weight of copolymerizable monomers is heated with an initiator, a suspension medium system and, if desired, additives in aqueous suspension to a temperature ≥ 30°C but below the polymerization temperature and then after addition of the polyacrylic ester latex polymerization is carried out at temperatures of from 40 to 90°C to the desired degree of conversion.

8

**Revendications**

1. Procédé pour préparer des compositions thermoplastiques à base d'homo- ou de copolymères de chlorure du vinyle et à base de polyacrylates, qui sont préparés en émulsions aqueuses par polymérisation d'acrylates en présence de composés à effet de réticulation, copolymérisables avec les acrylates et comportant au moins deux doubles liaisons non conjuguées, ayant une température de transition vitreuse inférieure à 20°C,
caractérisé par le fait que le chlorure de vinyle, ou le chlorure de vinyle comportant jusqu'à 20 % en poids de monomères copolymérisables, est, avec un amorceur, un système de mise en suspension et éventuellement des additifs, chauffé, en suspension aqueuse, a une température ≧ 30°C, mais inférieure à la température de polymérisation, et est ensuite polymérisé, jusqu'au taux de conversion souhaité, par addition du latex de polyacrylate, à des températures de 40 à 90°C.